# EUROPÄISCHE PATENTSCHRIFT

(11) **EP 2 192 023 B1**
(45) Veröffentlichungstag und Bekanntmachung des Hinweises auf die Patenterteilung: **15.06.2011**
(21) Anmeldenummer: 09014685.3
(22) Anmeldetag: 25.11.2009
(51) Int. Cl.: B62D 5/04

(54) **Elektromechanische Servolenkung mit Kugelgewindetrieb**
Electromechanical power steering with ball screw
Direction assistée électromécanique dotée d'une vis d'entraînement à bille

(30) Priorität: 01.12.2008 DE 102008059745
(43) Veröffentlichungstag der Anmeldung: 02.06.2010
(73) Patentinhaber: ThyssenKrupp Presta AG, 9492 Eschen (LI)
(72) Erfinder: Birkwald, Frank, 73760 Ostfildern (DE); Kiforiuk, Alexander, 73061 Ebersbach an der Fils (DE)
(74) Vertreter: Lenzing Gerber Stute

(56) Entgegenhaltungen:
- WO-A2-01/72571
- DE-A1- 3 735 517
- DE-A1- 3 836 255
- DE-A1- 10 350 040

## Beschreibung

Die vorliegende Erfindung betrifft eine elektromechanische Servolenkung mit Kugelgewindetrieb nach dem Oberbegriff des Anspruchs 1.

Kugelgewindetriebe werden in Fahrzeugen vor allem in Lenkgetrieben eingesetzt. Aufgabe des Kugelgewindetriebs ist es dabei, eine Drehbewegung eines elektromotorischen Antriebs in eine translatorische Bewegung zu überführen. Eine Umwandlung der Drehbewegung in eine translatorische Bewegung wird im Lenkgetriebe erforderlich, um eine translatorische Bewegung einer Spurstange zu bewirken.

Im Stand der Technik ist dies beispielsweise in der DE 102006061949 A1 und der EP 1553006 A1 beschrieben.

In der DE 102006061949 A1 wir eine Rotationsbewegung von einem elektrischen Servomotor erzeugt. Die Rotationsbewegung wird über eine Rotorwelle einer Kupplung und anschließend direkt einem Getriebe zugeführt. Die Rotorwelle ist als Hohlwelle ausgebildet. Das eingebaute Getriebe ist dabei als Kugelumlaufgetriebe ausgeführt. Die Rotationsbewegung des Servomotors wird durch das Kugelumlaufgetriebe in eine translatorische Bewegung einer Kugelgewindespindel umgewandelt. Der Servomotor hat einen relativ großen Platzbedarf, weil er aufgrund des direkten Antriebs der Kugelmutter langsam und mit hohem Drehmoment laufen muss. Außerdem ist das Gewicht des Servomotors relativ hoch, was sich ungünstig auf den Kraftstoffverbrauch des Fahrzeugs auswirkt.

In der EP 1553006 A1 wird die Leistung für die translatorische Bewegung der Kugelgewindespindel durch eine von einem Antriebsriemen betriebene Riemenscheibe über eine Kugelgewindemutter und Kugeln auf die Kugelgewindespindel übertragen. Die Antriebsleistung wird hierbei von einem Elektromotor auf den Antriebsriemen übertragen. Diese Antriebsvariante der Kugelgewindespindel weist den Nachteil auf, dass der Zahnriemen aufgrund der hohen Anforderung an seine Lebensdauer ein teures Bestandteil ist.

Die DE 3735517 C2 zeigt einen Aktuator für die Betätigung einer Hinterachslenkung mit einer Gewindespindel, einem Hohlwellenmotor und einem als Planetengetriebe ausgeführten Reduziergetriebe. Bei diesem Getriebe ist das Hohlrad mit der Kugelmutter verbunden, der Planetenträger ist gehäusefest und das Sonnenrad ist mit der Motorwelle verbunden. Diese Anordnung weist eine relativ große Baulänge auf und die Kugelmutter ist an beiden Enden mit Kugellagern gelagert.

Die DE 3836255 C2 zeigt einen ähnlichen Aktuator für Hinterradlenkung mit einem Hohlwellenmotor, einem Kugelumlauf und einem Planetengetriebe. Der Hohlwellenmotor treibt das Sonnenrad an, das Hohlrad ist gehäusefest und der Planetenträger ist mit der Kugelmutter verbunden. Auch hier ist eine aufwändige Lagerung sowohl der Kugelmutter als auch des Rotors gegenüber der Kugelmutter erforderlich.

Die EP 1813506 A1 zeigt eine elektrische Servolenkung mit Hohlwellenmotor und'Planetenwälzgetriebe. Hier sind die Planeten als langgestreckte Gewindespindeln ausgeführt. Das Sonnenrad ist die Gewindespindel der Zahnstange. Ein Kugelumlauf ist nicht vorgesehen.

Aufgabe der Erfindung ist es daher, einen Antrieb für die translatorische Bewegung der Kugelgewindespindel zu schaffen, der weniger Raum beansprucht, dessen Motor ein geringeres Gewicht aufweist und der ein geringeres Antriebsdrehmoment erbringen muss.

Die Aufgabe wird mit einer Servolenkung des Anspruchs 1 erfüllt, die weiteren Unteransprüche geben zweckmäßige Weiterbildungen an.

Die erfindungsgemäße Lösung sieht eine elektromechanische Servolenkung mit Kugelgewindetrieb vor, die einen Hohlwellenmotor mit einem gehäusefesten Stator und einem drehbar gelagerten Rotor, der koaxial zu einer Längsachse angeordnet ist und mit einer Hohlwelle antriebsmäßig verbunden ist, eine koaxial zu der Längsachse angeordnete Kugelgewindemutter, die über Kugeln eine Kugelgewindespindel antreibt vor, wobei der Rotor über ein Reduziergetriebe in Form eines Planetengetriebes die Kugelgewindemutter antreibt und das Sonnenrad zwischen einem Gehäuse und einem Lenkgehäuse fixiert ist. Das Sonnenrad wird mit Schrauben an Stegen des Gehäuses und des Lenkgehäuses befestigt. Dabei ragt der Teil des Sonnenrades, der Zähne aufweist, in das Gehäuse hinein und verläuft koaxial zur Längsachse.

Der Einsatz des Reduziergetriebes sorgt dafür, dass ein geringeres Antriebsmoment benötigt wird, um die Kugelgewindespindel anzutreiben, als bei den im Stand der Technik dokumentierten Lösungen. Deshalb kann ein Antriebsmotor mit einer geringeren Leistungsaufnahme den Antrieb der Servolenkung vornehmen. Da das Drehmoment, das ein elektrischer Motor abgibt, etwa proportional zum Durchmesser seines Ankers ist, wird bei Auswahl eines Elektromotors mit geringerer Leistung und geringerem Drehmoment das Gewicht der Servolenkung reduziert. Das führt zu einer Kraftstoffeinsparung. Ferner wird für den kleineren Elektromotor weniger Bauraum benötigt.

In der Servolenkung weist die Hohlwelle eine Innenverzahnung auf, die ein Hohlrad eines Planetengetriebes bildet, wobei die Kugelgewindemutter mit einem Planetenräder tragenden Planetenträger verbunden ist, und die Planetenräder des Planetengetriebes mit einem gehäusefesten Sonnenrad kämmen.

Der Einsatz eines Planetengetriebes als Untersetzungsgetriebe ist eine Möglichkeit, eine Untersetzung zu erzeugen. Das Planetengetriebe weist in der erfindungsgemäßen Servolenkung mindestens zwei planetenräder auf. Die kompakte Bauweise konnte vor allem durch den Einsatz des Planetengetriebes erzielt werden.

Die Kugelgewindespindel durchdringt das Sonnenrad koaxial zur Längsachse.

Diese Konstruktion ermöglicht es, das Sonnenrad zusammen mit den Planetenrädern, dem Hohlrad, Rotor und Anker kompakt in einem Gehäuse unterzubringen. Dies führt zu einer Raumersparnis.

Die Planetenräder sind auf Bolzen eines mit der Kugelgewindemutter drehfest verbundenen oder einstückigen Planetenträgers gelagert.

Die Konstruktion weist den Vorteil auf, dass eine Drehbewegung der Planetenräder durch die Bolzen direkt auf die Kugelgewindemutter übertragen wird. Es treten keine weiteren Bauelemente auf, die den wirkungsgrad der Servolenkung verringern würden.

Die Kugelgewindespindel ist - abhängig von der Drehrichtung des Hohlwellenmotors - in der Figurenebene entlang der Längsachse nach Rechts R oder Links L bewegbar.

Die Drehrichtung des Hohlwellenmotors ist von der Polung abhängig. Deshalb ist eine Änderung der Drehrichtung durch Ändern der Polung einfach durchführbar.

Die Kugelgewindemutter ist mit Bolzen zusammen einstückig ausgeführt.

Diese Konstruktion ergibt in fertigungstechnischer Hinsicht und mit Blick auf die Festigkeit Vorteile. Die einstückige Ausführung erlaubt eine Fertigung als Gussteil. Die Festigkeit der Kugelgewindemutter wird dadurch positiv beeinflusst, dass durch die angewandte Fertigungstechnik Spannungsspitzen - wie sie beispielsweise bei geschweißten Werkstücken auftreten - nicht oder in erheblich geringerem Ausmaß auftreten. Eine mechanische Nachbearbeitung - beispielsweise durch Fräsen - hat die Aufgabe, das Werkstück auf sein Sollmaß zu bringen.

Der Rotor ist einstückig ausgeführt.

Er weist die Gestalt eines geraden Hohlzylinders auf, an dessen einem Ende eine Hohlwelle ausgebildet ist. Die Hohlwelle weist einen Eingriffsbereich auf, der auf einer Innenseite eine Stirnverzahnung aufweist. Alternativ dazu kann die Hohlwelle in ihrem Eingriffsbereich eine Schrägverzahnung aufweisen. Die einstückige Ausführung erlaubt eine kostengünstige Fertigung, beispielsweise durch Gießen und anschließende Bearbeitung durch Fräsen. Der Verlauf der mechanischen Spannungen im Rotor wird dadurch positiv beeinflusst, weil das Entstehen von Spannungsspitzen so verringert wird.

Die Servolenkung weist ein Lager auf, das die Aufgabe hat, neben der Kugelgewindemutter Radialkräfte aufzunehmen.

Hierdurch wird die Belastung der Kugelgewindemutter reduziert.

Nachfolgend wird ein Ausführungsbeispiel der Erfindung anhand der Zeichnung beschrieben. Es zeigen:
Figur 1: einen Längsschnitt durch eine elektromechanische Servolenkung mit Kugelgewindetrieb;
Figur 2: einen Querschnitt senkrecht zu einer Längsachse der elektromechanischen Servolenkung mit Kugelgewindetrieb; sowie
Figur 3: den in Figur 1 gestrichelt markierten Bereich in einer Vergrößerung.

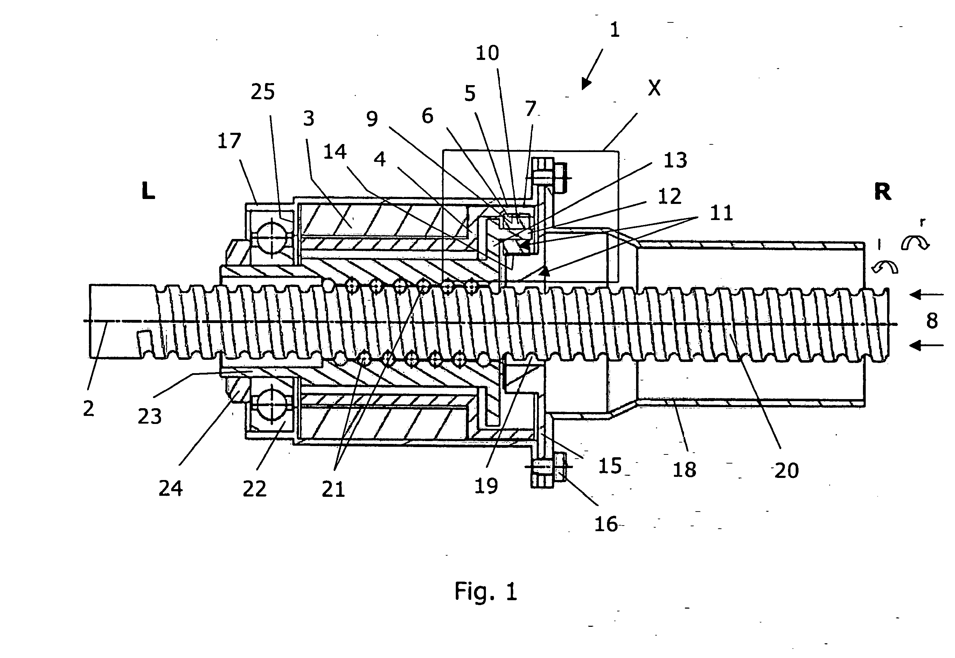

In der Figur 1 ist ein Längsschnitt durch eine elektromechanische Servolenkung mit Kugelgewindetrieb 1 entlang deren Längsachse 2 dargestellt.

Der Antrieb der elektromechanischen Servolenkung mit Kugelgewindetrieb 1 besteht aus einem permanent erregten Hohlwellenmotor. Der Hohlwellenmotor weist dabei eine hohlzylinderförmige Gestalt auf. Er besteht aus einem Stator 3 und einem Anker 4. Der Anker 4 ist in den Startor 3 eingelassen. Stator 3 und Anker 4 liegen koaxial zur Längsachse 2. Der Anker 4 ist um die Längsachse 2 drehbar und weist eine holzylinderartige Gestalt auf. Der Anker 4 weist einen Eingriffsbereich 5 auf, der mit einer Innenverzahnung 6 versehen ist. Die Innenverzahnung 6 ist bevorzugt als Stirnverzahnung ausgeführt. Alternativ dazu kann sie als Schrägverzahnung ausgeführt werden. Der Anker 4 dreht sich um die Längsachse 2. Von einer Postition 8 auf die Servolenkung blickend, kann der Anker 4 Rotationen nach rechts r oder links 1 um die Längsachse 2 ausführen. Die Innenverzahnung 6 des Ankers 4 greift in eine Verzahnung 9 von Planetenrädern 10, die Bestandteil eines Planetengetriebes 11 sind. Von den mindestens zwei Planetenrädern 10 ist in dieser Figur nur eins eingezeichnet. Die Verzahnung 9 ist ebenfalls als Stirnverzahnung ausgeführt. Alternativ kann die Verzahnung 9 als Schrägverzahnung ausgeführt werden.

Die Planetenräder 10 sind auf Bolzen 12 einer Kugelgewindemutter 13 drehbar gelagert. Die Kugelgewindemutter 13 ist mit den Bolzen 12 einstückig ausgeführt.

Die Planetenräder 10 greifen in eine Verzahnung 14 eines Sonnenrades 15, das Bestandteil des Planetengetriebes 11 ist. Die Verzahnung 14 ist bevorzugt als Stirnverzahnung ausgeführt. Alternativ dazu ist eine Schrägverzahnung ausführbar.

Das Sonnenrad 15 ist mittels einer lösbaren Verbindung, die als Schraubenverbindung 16 ausgeführt ist, zwischen einem Gehäuse 17 und einem Lenkgehäuse 18 fixiert. Das Sonnenrad 15 ist koaxial zur Längsachse 2 in dem Gehäuse 17 eingebaut. Das Sonnenrad 15 ragt mit seinem verzahnten Bereich vollständig in das Gehäuse 17.

Das Sonnenrad 15 weist mittig eine Durchgangsbohrung 19 auf. Durch die Durchgangsbohrung 19 führt eine Kugelgewindespindel 20 mit Kugeln 21. Die Kugelgewindespindel 20 ist koaxial zur Längsachse 2 angeordnet. Die Kugelgewindespindel 20 durchdringt die Kugelgewindemutter 13 koaxial zur Längsachse 2.

Ein Drehmoment wird von der Kugelgewindemutter 13 über die Kugeln 21 zur Kugelgewindespindel 20 übertragen.

In dieser Darstellung ragt die Kugelgewindespindel in der Figurenebene beidseits rechts und links über Randbereiche des Gehäuses 17 und des Lenkgehäuses 18 hinaus.

Das Gehäuse 17 weist neben dem Stator 3, dem Anker 4, der Kugelgewindemutter 13, dem Planetengetriebe 11, der Kugelgewindespindel 20 und den Kugeln 21 noch ein Lager 22 auf, das bevorzugt als Rillenkugellager ausgeführt ist. Alternativ sind Ausführungen als Wälz- und Nadellager möglich. Das Lager 22 ist in der Darstellung am linken Ende der Kugelgewindemutter 13 auf einem Absatz 23 der Kugelgewindemutter 13 geschoben. Das Lager 22 dient neben der Kugelgewindespindel 20 zur Aufnahme von Kräften, die senkrecht zur Längsachse 2 wirken. Gegen Längsbewegungen nach Links L in der Figurenebene ist das Kugellager 22 durch eine Nutmutter 24 gesichert, die auf die Kugelgewindemutter 13 aufgeschraubt ist. Gegen eine Längsverschiebung nach Rechts R in der Figurenebene ist das Kugellager 22 durch einen Anschlag an einer Wand 25 des Gehäuses 17 gesichert.

Bei dieser elektromechanischen Servolenkung mit Kugelgewindetrieb 1 wird die Drehbewegung des Hohlwellenmotors in eine translatorische Bewegung der Kugelgewindespindel 20 überführt. Je nach Drehrichtung des Hohlwellenmotors weist die Kugelgewindespindel 20 einen nach Rechts R oder Links L gerichtete translatorische Bewegung auf.

Bei einer Drehbewegung des Hohlwellenmotors rotiert zunächst der Anker 4 um die Längsachse 2. Je nach Polung des Hohlwellenmotors führt der Anker 4 eine Drehung nach rechts r oder links 1 um die Längsachse 2 vom Standpunkt 8 eines Beobachters der auf die Kugelgewindespindel 20 blickt aus. Über die zum Anker 4 gehörige Innenverzahnung 6 wird die Drehbewegung auf die Planetenräder 10 übertragen. Die Planetenräder 10 übertragen die Drehbewegung über die Bolzen 12 auf die Kugelgewindemutter 13. Die Kugelgewindemutter 13 überträgt mittels der Kugeln 21 ein Drehmoment auf die Kugelgewindespindel 20. Je nach Drehrichtung der Kugelgewindemutter 13 führt die Kugelgewindespindel 20 eine translatorische Bewegung nach Links L oder Rechts R in der Figurenebene aus. Dabei wird die Drehrichtung der Kugelgewindemutter 13 durch die Drehrichtung des Ankers 4 festgelegt.

Bei dem oben beschriebenem Antrieb der Kugelgewindespindel 20 durch den Hohlwellenmotor liegt eine Bewegungsübertragung mit einer - konstanten - Untersetzung vor. Die Untersetzung wird durch die Innenverzahnung 6 des Ankers 4 mit den Planetenrädern 10 erzeugt. Das Planetengetriebe 11 sorgt dabei für eine kompakte Bauweise dieser Vorrichtung. Diese Bauweise reduziert das Gewicht und sorgt damit für eine Kraftstoffeinsparung. Alternativ zum Einsatz des Planetengetriebes 11 kann auch ein anderes Untersetzungsgetriebe benutzt werden.

Getriebe der oben beschrieben Art weisen eine kompaktere Bauweise auf, als konventioneller EPS-Lenkgetriebe oder Antriebe mit Antriebsriemen. Die daraus resultierende Gewichtsersparnis kommt der Forderung nach Kraftstoffeinsparung entgegen. Der Einsatz des Planetenradgetriebes 11 erlaubt den Einsatz eines Motors - in diesem Fall den Einsatz eines Hohlwellenmotors - der ein geringeres Drehmoment als ein Motor in einem konventionellen EPS-Lenkgetriebe benötigt. Das Drehmoment eines Elektromotors ist etwa proprtional zu seinem Durchmesser. Dies führt aufgrund der massiven Bauweise derartiger Motoren zu einer Gewichtsreduktion bei Elektromotoren mit kleinerem Durchmesser.

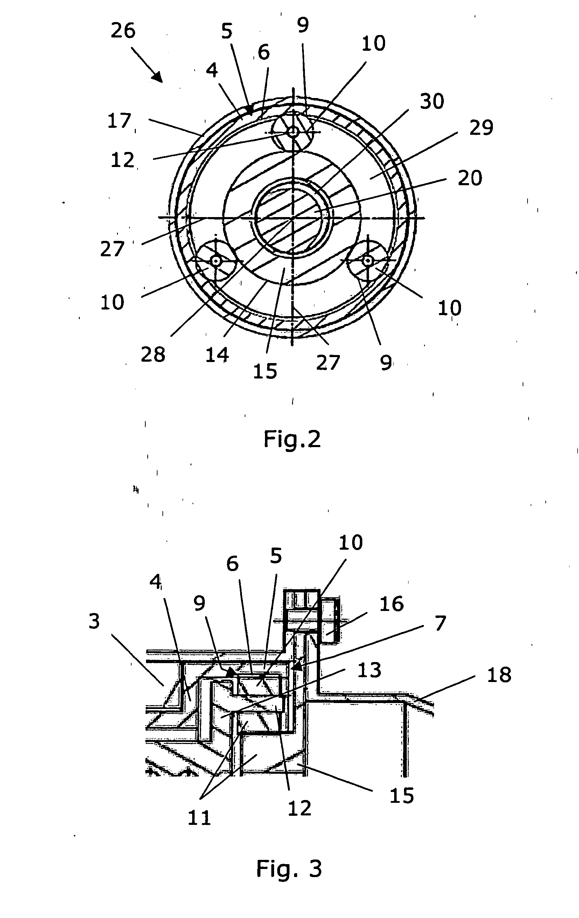

Figur 2 stellt einen Querschnitt 26 durch die elektromechanische Servolenkung mit Kugelgewindetrieb 1 dar. Diese Figur ist konzentrisch in einem kartesischen Koordinatensystem 27 dargestellt. Ein Mittelpunkt 28 dieses kartesischen Koordinatensystems 27 wird durch eine Projektion der Längsachse 2 angegeben.

Der Querschnitt 26 verläuft senkrecht zur Längsachse 2. Die Darstellung zeigt im äußersten Bereich einen Schnitt durch das Gehäuse 17. Unmittelbar unter dem Gehäuse 17 ist der Anker 4, mit seinem umliegenden Eingriffsbereich 5, der die Innenverzahnung 6 aufweist dargestellt.

Die Innenverzahnung 6 des Ankers 4 kämmt mit der Verzahnung 9 der im Innenbereich des Ankers 4 angeordneten Planetenräder 10. In dieser Darstellung sind drei Planetenräder 10 eingezeichnet. Zwei Planetenräder 10 müssen bei der erfindungsgemäßen Lösung mindestens mit der Innenverzahnung 6 kämmen. Die drei Planetenräder 10 sind Bestandteil des Platenradgetriebes 11.

Im Längsschnitt 1 ist nur ein Planetenrad 10 dargestellt, da die anderen zwei Planetenräder 10 nicht in der Schnittebene liegen.

Die Bolzen 12, auf die die Planetenräder 10 aufgesteckt sind, sind in der Figur 2 jeweils als konzentrische Kreise dargestellt. Die Verzahnungen 9 der Planetenräder 10 greifen in die Verzahnung 14 des Sonnenrades 15 ein. Die Verzahnung 9 der Planetenräder 10 und die Verzahnung 14 des Sonnenrades 15 sind in dieser Darstellung als volle Linien gezeichnet.

Ein nicht schraffierter kreisringförmiger Bereich 29 stellt die Rotationsebene der Planetenräder 10 um das Sonnenrad 15 dar.

Ein kreisbogenförmiger Bereich 30 stellt Kugelgewindegänge dar, in denen die Kugeln 21 transportiert werden. In dieser Figur ist keine der Kugeln 21 dargestellt.

In der Figur 3 sind die in Figur 1 gestrichelt eingeschlossenen und mit einem X bezeichneten Elemente als Detail vergrößert dargestellt.

Besonders deutlich werden durch diese Darstellung der Eingriffsbereich 5, die Hohlwelle 7 des Ankers 4 mit Innenverzahnung und die Verzahnung der Planetenräder 9 dargestellt.

Besonders vorteilhaft ist bei der in Fig. 1 dargestellten Ausführungsform, dass der Hohlwellenmotor die Kugelmutter koaxial umgibt, wobei die Kugelmutter nur einseitig in einem Kugellager gelagert ist. Für die Lagerung des Rotors gegenüber der Kugelmutter kann ein Nadellager vorgesehen sein. Es sind also gegenüber dem Stand der Technik weniger Lager vorzusehen. Durch die Montage des Sonnenrades in der beschriebenen Weise kann außerdem die gesamte Getriebeeinheit von dem Flansch des Gehäuses 17 her montiert werden. Dies vereinfacht die Montage in dem topfförmigen Gehäuse wesentlich.

### Bezugszeichenliste

1. Elektromechanische Servolenkung mit Kugelgewindetrieb - Längsschnitt
2. Längsachse
3. Stator
4. Rotor
5. Eingriffsbereich Anker - innenliegend
6. Innenverzahnung des Eingriffsbereichs 5
7. Hohlwelle
8. Position: Blick auf die Servolenkung von einer Seite
9. Verzahnung von Planetenrädern
10. Planetenrad
11. Planetengetriebe
12. Bolzen
13. Kugelgewindemutter mit Bolzen
14. Verzahnung eines Sonnenrades 15
15. Sonnenrad
16. Schraubenverbindung
17. Gehäuse
18. Lenkgehäuse
19. Durchgangsbohrung
20. Kugelgewindespindel
21. Kugeln
22. Lager
23. Absatz der Kugelgewindemutter 13
24. Nutmutter
25. Wand
26. Elektromechanische Servolenkung mit Kugelgewindetrieb - Querschnitt
27. kartesisches Koordinatensystem
28. Mittelpunkt
29. Rotationsebene der Planetenräder 10
30. Kugelgewindegänge

## Patentansprüche

1. Elektromechanische Servolenkung mit Kugelgewindetrieb (1), aufweisend:
- einen Hohlwellenmotor mit einem gehäusefesten Stator (3) und einem drehbar gelagerten Rotor (4), der koaxial zu einer Längsachse (2) angeordnet ist und mit einer Hohlwelle (7) antriebsmäßig verbunden ist,
- eine koaxial zu der Längsachse (2) angeordnete Kugelgewindemutter (13), die über Kugeln (21) eine Kugelgewindespindel (20) antreibt, und
- der Rotor (4) über ein als Planetengetriebe ausgebildetes Reduziergetriebe die Kugelgewindemutter antreibt, **dadurch gekennzeichnet, dass**
- das Planetengetriebe ein Sonnenrad (15) umfasst, das zwischen einem Gehäuse (17) und einem Lenkgehäuse (18) fixiert ist.

2. Servolenkung nach Anspruch 1, **dadurch gekennzeichnet, dass**
- die Hohlwelle (7) eine Innenverzahnung (6) aufweist, die das Hohlrad des Planetengetriebes (11) bildet,
- dass die Kugelgewindemutter (13) mit einem Planetenräder (10) tragenden Planetenträger verbunden ist und
- dass,die Planetenräder (10) des Planetengetriebes (11) mit dem gehäusefesten Sonnenrad (15) kämmen.

3. Servolenkung nach einem der vorhergehenden Ansprüche, **dadurch gekennzeichnet, dass** die Kugelgewindespindel (20) das Sonnenrad (15) koaxial zur Längsachse (2) durchdringt.

4. Servolenkung nach einem der vorhergehenden Ansprüche, **dadurch gekennzeichnet, dass** die Planetenräder (10) auf Bolzen (12) der Kugelgewindemutter (13) gelagert sind.

5. Servolenkung nach einem der vorhergehenden Ansprüche, **dadurch gekennzeichnet, dass** die Kugelgewindemutter (13) mit Bolzen (12) einstückig ausgeführt ist.

6. Servolenkung nach einem der vorhergehenden Ansprüche, **dadurch gekennzeichnet, dass** der Rotor (4) mit dem Hohlrad einstückig ausgeführt ist.

7. Servolenkung nach einem der vorhergehenden Ansprüche, **dadurch gekennzeichnet, dass** der Hohlwellenmotor ein permanent erregter Elektromotor ist.

## Claims

1. Electromechanical power steering with ball screw drive (1), having:
- a hollow shaft motor with a stator (3) fixed to the housing and a pivot-mounted rotor (4) arranged coaxially to a longitudinal axis (2) and connected by a drive connection to a hollow shaft (7),
- a ball screw nut (13) arranged coaxially to the longitudinal axis (2), which via balls (21) drives a ball screw spindle (20), and
- the rotor (4) via reduction gear in the form of a planetary gear drives the ball screw nut, **characterised in that**
- the planetary gear comprises a sun wheel (15), which is fixed between a housing (17) and a steering housing (18).

2. Power steering according to claim 1, **characterised in that**
- the hollow shaft (7) has an internal toothing (6), which forms the hollow wheel of the planetary gear (11),
- the ball screw nut (13) is connected to a planet carrier supporting planetary wheels (10),
- the planetary wheels (10) of the planetary gear (11) mesh with the sun wheel (15) fixed to the housing.

3. Power assisted steering according to one of the preceding claims, **characterised in that** the ball screw spindle (20) penetrates the sun wheel (15) coaxially to the longitudinal axis (2).

4. Power assisted steering according to one of the preceding claims, **characterised in that** the planetary wheels (10) are supported by bolts of the ball screw nuts (13).

5. Power assisted steering according to one of the preceding claims, **characterised in that** the ball screw nut (13) with bolts (12) is designed as a one-piece unit.

6. Power assisted steering according to one of the preceding claims, **characterised in that** the rotor (4) is designed as a one-piece unit with the hollow wheel.

7. Power assisted steering according to one of the preceding claims, **characterised in that** the hollow shaft motor is a permanently excited electric motor.

## Revendications

1. Direction assistée, électromécanique, à transmission par système vis à billes (1), comprenant
- un moteur à arbre creux comportant un stator (3) fixe avec le carter et un rotor (4) monté rotatif, qui est agencé coaxialement à un axe longitudinal (2) et est relié, sur le plan de la transmission d'entraînement, à un arbre creux (7),
- un écrou (13) du système vis à billes, qui est agencé coaxialement à l'axe longitudinal (2), et entraîne, par l'intermédiaire de billes (21), une broche ou vis (20) du système vis à billes, et
- le rotor (4) entraînant l'écrou du système vis à billes par l'intermédiaire d'un réducteur réalisé sous la forme d'une transmission à train épicycloïdal,
**caractérisée en ce que**
- la transmission à train épicycloïdal englobe une roue centrale (15) qui est fixée entre un carter (17) et un carter de direction (18).

2. Direction assistée selon la revendication 1, **caractérisée**
- **en ce que** l'arbre creux (7) présente une denture intérieure (6), qui forme la couronne creuse de la transmission à train épicycloïdal (11),
- **en ce que** l'écrou (13) du système vis à billes est relié à un porte-satellites supportant des satellites (10), et
- **en ce que** les satellites (10) de la transmission à train épicycloïdal (11) engrènent avec la roue centrale (15) fixe avec le carter.

3. Direction assistée selon l'une des revendications précédentes, **caractérisée en ce que** la vis ou broche (20) du système vis à billes traverse la roue centrale (5), coaxialement à l'axe longitudinal (2).

4. Direction assistée selon l'une des revendications précédentes, **caractérisée en ce que** les satellites (10) sont montés sur des tourillons (12) de l'écrou (13) du système vis à billes.

5. Direction assistée selon l'une des revendications précédentes, **caractérisée en ce que** l'écrou (13) du système vis à billes est réalisé d'un seul tenant avec des tourillons (12).

6. Direction assistée selon l'une des revendications précédentes, **caractérisée en ce que** le rotor (4) est réalisé d'un seul tenant avec la couronne creuse.

7. Direction assistée selon l'une des revendications précédentes, **caractérisée en ce que** le moteur à arbre creux est un moteur électrique à excitation permanente.
